# EUROPÄISCHE PATENTSCHRIFT

(11) **EP 3 129 995 B1**
(45) Veröffentlichungstag und Bekanntmachung des Hinweises auf die Patenterteilung: **30.09.2020**
(21) Anmeldenummer: 15709839.3
(22) Anmeldetag: 06.03.2015
(51) Int. Cl.: H01F 27/30, H01F 27/32, H01F 41/12, H01F 38/14

(54) **WICKLUNGSANORDNUNG UND VERFAHREN ZUR HERSTELLUNG DER WICKLUNGSANORDNUNG**
WINDING ARRANGEMENT AND METHOD FOR PRODUCING THE WINDING ARRANGEMENT
STRUCTURE D'ENROULEMENT ET PROCÉDÉ DE FABRICATION DE LA STRUCTURE D'ENROULEMENT

(30) Priorität: 11.04.2014 DE 102014005343
(43) Veröffentlichungstag der Anmeldung: 15.02.2017
(73) Patentinhaber: SEW-EURODRIVE GmbH & Co. KG, 76646 Bruchsal (DE)
(72) Erfinder: BÖSER, Andreas, 76694 Forst (DE); SCHROEDER, Detlev, 68809 Neulussheim (DE); SCHMIDT, Josef, 76676 Graben-Neudorf (DE)
(86) Internationale Anmeldenummer: PCT/EP2015/000501
(87) Internationale Veröffentlichungsnummer: WO 2015/154838

(56) Entgegenhaltungen:
- DE-A1-102011 014 752
- DE-A1-102011 106 027
- DE-A1-102011 110 652
- DE-U1-202012 101 396

## Beschreibung

Die Erfindung betrifft eine Wicklungsanordnung und ein Verfahren zu deren Herstellung.

Aus der DE 10 2011 110 652 A1 ist ein Verfahren und eine Vorrichtung zum Herstellen von Flachspulen bekannt.

Aus der DE 10 2011 014 752 A1 ist ein System zum berührungslosen Übertragen von Energie an ein Fahrzeug bekannt.

Aus der US 2013 024 9304 A1 ist eine drahtlose Leistungsübertragungsvorrichtung und ein Verfahren zu deren Herstellung bekannt.

Aus der DE 10 2010 050 935 A1 ist eine Vorrichtung zur berührungslosen Energieübertragung bekannt.

Aus der US 3 683 495 A ist ein Verfahren zur Fertigung von scheibenförmigen Wicklungen bekannt.

**Aus der** DE 10 2011 106 027 A1 **ist ein Transformatorteil für ein Übertragungssystem zum Laden der Traktionsbatterien eines elektrisch angetriebenen Kraftfahrzeugs bekannt. Dabei ist die elektrische Spulenanordnung des Transformatorteils von einem flexiblen Kunststoffmaterial umspritzt oder umgossen und die Drahtwindungen sind an einem biegsamen Halterahmen angeordnet. Der Halterahmen besteht dabei aus mehreren zueinander beabstandeten, aber miteinander verbundenen Spulenträgern, wobei jeder Spulenträger angeformte Halteelemente zur Aufnahme eines Spulendrahtes aufweist.**

Der Erfindung liegt daher die Aufgabe zugrunde, eine Wicklungsanordnung für ein Primärteil zur berührungslosen Energieübertragung an ein in einem Elektrofahrzeug vorgesehenes Sekundärteil und ein Verfahren zu deren Herstellung weiterzubilden.

Erfindungsgemäß wird die Aufgabe bei der Wicklungsanordnung nach den in Anspruch 1 angegebenen Merkmalen gelöst.

Wichtige Merkmale der Erfindung bei der Wicklungsanordnung für ein Primärteil zur berührungslosen Energie- und/oder Signalübertragung an ein in einem Elektrofahrzeug vorgesehenes Sekundärteil sind, dass
die Wicklungsanordnung mindestens eine Wicklung aus Wicklungsdraht und zwei oder mehr Wicklungsträger aufweist,
wobei die mindestens eine Wicklung mehrere Windungen, insbesondere also mehrere Wicklungsdrahtabschnitte, aufweist,
wobei die mindestens eine Wicklung als Spiralwicklung ausgeführt ist, insbesondere wobei die, insbesondere alle, Windungen der mindestens einen Wicklung im Wesentlichen innerhalb einer Wicklungsebene angeordnet sind,
wobei jeder Wicklungsträger mit mindestens zwei Windungen verbunden ist und
jede Windung mit mindestens einem Wicklungsträger verbunden ist,
wobei die, insbesondere alle, Wicklungsträger jeweils voneinander beabstandet sind,
wobei die, insbesondere alle, Windungen der mindestens einen Wicklung jeweils voneinander beabstandet sind,
wobei eine erste Windung mit einem ersten der Wicklungsträger verbunden ist,
wobei die erste Windung in Umfangsrichtung, also Wicklungsrichtung, mehrfach an voneinander beabstandeten Stellen mit dem ersten Wicklungsträger verbunden ist,

insbesondere wobei der erste Wicklungsträger einteilig, also einstückig, ausgeführt, insbesondere ausgeformt, ist.

Unter Spiralwicklung wird in dieser Schrift eine Wicklung verstanden, bei welcher sich der in Richtung zur Wicklungsachse vorliegende, insbesondere minimale, Abstand des Wicklungsdrahtes zwischen benachbarten Windungen mit zunehmender Windungsanzahl verändert, insbesondere monoton abnimmt oder zunimmt, insbesondere wobei der Abstand des Wicklungsdrahtes zur Wicklungsachse mit zunehmender Windungszahl zunimmt.

Der Verlauf des Wicklungsdrahtes kann dabei auch abschnittsweise geradlinig verlaufen, so dass im Wesentlichen eine eckige Spiralwicklung entsteht.

Die Spiralwicklung befindet sich bei Ausführung als ebene Spiralwicklung entweder in einer Ebene, also Wicklungsebene, oder entspricht bei Ausführung als dreidimensionalen Spiralwicklung einer Projektion einer solchen ebenen Spiralwicklung auf eine gekrümmte Fläche.

Unter Umfangsrichtung wird die Richtung entlang des Wicklungsdrahtes verstanden, also als Wicklungsrichtung.

Von Vorteil bei der Erfindung ist dabei, dass eine einfache und kostengünstige Herstellung bei erhöhter Stabilität ermöglicht ist. Dadurch, dass eine Windung in Umfangsrichtung mehrfach an voneinander beabstandeten Stellen mit einem Wicklungsträger verbunden ist, wird eine stabile räumliche Fixierung des Wicklungsdrahtes erreicht. Ein Verbiegen beispielsweise in Richtung senkrecht zur Wicklungsrichtung ist dadurch erschwert. Das Verbundteil aus Wicklungsdraht und Wicklungsträgern bildet den weiteren Herstellungsprozess eine vorkomplettierte Einheit. Daher ist das Teil vor einem möglichen Vergießen mit Vergussmasse ein- und auslagerbar, ohne dass sich die räumliche Anordnung des Wicklungsdrahtes ändert. Die genaue Anordnung des Wicklungsdrahtes ist dabei für eine möglichst homogene Magnetfeldverteilung ausschlaggebend.

Bei einer **erfindungsgemäßen** Ausgestaltung sind die Wicklungsträger jeweils stoffschlüssig mit den Windungen an Verbindungsstellen verbunden, wobei der Wicklungsdraht an jeder Verbindungsstelle einen vollständig vom Material der Wicklungsträger umschlossenen Querschnitt aufweist. Insbesondere sind die Wicklungsträger an die Windungen angespritzt und/oder aus Kunststoff, insbesondere aus Schmelzklebstoff und/oder aus Thermoplast und/oder aus elastischem Material, ausgeführt. Von Vorteil ist dabei, dass eine feste Verbindung zwischen den Windungen und den Wicklungsträgern besteht, so dass kein Verschieben oder Verrutschen der Wicklungsträger relativ zu den Windungen möglich ist. Darüber hinaus sind die Wicklungsträger in beliebiger Form mittels eines einfachen und kostengünstigen Spritzgussverfahrens herstellbar.

Bei einer vorteilhaften Ausgestaltung weist die Wicklungsanordnung Vergussmasse, insbesondere Polymerbeton, und eine Oberfläche auf, wobei die Oberfläche zumindest aus einem oder mehreren Oberflächenabschnitten der Vergussmasse gebildet ist und wobei die Windungen innerhalb der Vergussmasse angeordnet und von dieser umgeben sind. Von Vorteil ist dabei, dass der Raumbereich zwischen den Windungen mit Vergussmasse ausfüllbar ist. Das Verbundteil aus Wicklungsdraht und Wicklungsträgern ist also von Vergussmasse durchströmbar und der Wicklungsdraht ist von der äußeren Oberfläche der Vergussmasse beabstandet.

Bei einer vorteilhaften Ausgestaltung bestehen die Wicklungsträger jeweils aus mindestens einem Grundkörper und mindestens einem Beabstandungssteg, wobei der mindestens eine Grundkörper innerhalb der Wicklungsanordnung angeordnet ist, also von der Oberfläche der Wicklungsanordnung beabstandet ist, insbesondere mittels des jeweiligen Beabstandungssteges, wobei die Oberfläche zumindest aus einem oder mehreren äußeren Oberflächenabschnitten der Vergussmasse und aus jeweiligen Oberflächenabschnitten der, insbesondere aller, Beabstandungsstege gebildet ist. Die Grundkörper sind also von der Oberfläche der Wicklungsanordnung beabstandet. Die Spitzen der Beabstandungsstege bilden einen Teil der äußeren Oberfläche der Wicklungsanordnung. Von Vorteil ist dabei, dass ein definierter Abstand zwischen dem Wicklungsdraht und der äußeren Oberfläche der Wicklungsanordnung herstellbar ist. Die Beabstandungsstege dienen während der Herstellung der Wicklungsanordnung zur Positionierung des Verbundteils aus Wicklungsdraht und Wicklungsträgern innerhalb eines Gußformwerkzeuges.

Bei einer vorteilhaften Ausgestaltung weist mindestens ein Wicklungsträger mehrere Beabstandungsstege auf, wobei jeder der Beabstandungsstege jeweils einer Windung zugeordnet ist, insbesondere wobei der jeweils zugeordnete Beabstandungssteg näher an der zugeordneten Windung angeordnet ist als an einer anderen Windung. Von Vorteil ist dabei, dass der definierte Abstand zwischen dem Wicklungsdraht und der äußeren Oberfläche der Wicklungsanordnung besser einstellbar ist.

Bei einer vorteilhaften Ausgestaltung weist mindestens ein Wicklungsträger mehrere Grundkörper auf, wobei die Grundkörper jeweils über mindestens einen Beabstandungssteg und/oder über mindestens einen Verbindungssteg miteinander verbunden sind. Von Vorteil ist dabei, dass mehrere Grundkörper innerhalb eines Spritzgussschrittes herstellbar sind und die Stabilität der Wicklungsanordnung erhöht ist.

Bei einer vorteilhaften Ausgestaltung ist mindestens einer der Wicklungsträger als Verbundteil aus einem Kunststoffteil und mindestens einem Verbindungselement, insbesondere Gewindebuchse, aus Metall, insbesondere Aluminium oder Edelstahl, ausgeführt, wobei das mindestens eine Verbindungselement einen Abschnitt aufweist, wobei der Abschnitt eine Öffnung des mindestens einen Verbindungselements berandet, wobei der Abschnitt einen Teil der Oberfläche der Wicklungsanordnung bildet. Die Öffnung des Verbindungselementes befindet sich also an der Oberfläche der Wicklungsanordnung und ist von außen zugänglich. Von Vorteil ist dabei, dass die Wicklungsanordnung in einfacher Weise mit Ferritplatten und/oder Aluplatten und/oder mit einer Trägerplatte verbindbar, insbesondere verschraubbar, ist.

Bei einer vorteilhaften Ausgestaltung ist das Verbindungselement formschlüssig mit dem Wicklungsträger verbunden und/oder das Verbindungselement ist an der Oberfläche des Wicklungsträgers weniger breit ausgeführt als im Inneren des Wicklungsträgers, insbesondere als in einem von der Oberfläche des Wicklungsträgers beabstandeten Bereich im Inneren des Wicklungsträgers und/oder das Verbindungselement weist einen widerhakenartigen Abschnitt und/oder Ankerabschnitt im Inneren des Wicklungsträgers aufweist. Von Vorteil ist dabei, dass die Verbindung zwischen Verbindungselement und Wicklungsträger stabil ist und ein einfaches Lösen des Verbindungselementes verhindert wird.

Bei einer vorteilhaften Ausgestaltung ist mindestens ein Wicklungsträger als Verbundteil aus einem Kunststoffteil und einer Antenne zur Positionierung eines Elektrofahrzeuges und/oder zur Kommunikation mit einem Elektrofahrzeug ausgeführt. Die Antenne ist stoffschlüssig mit dem Wicklungsträger verbunden, insbesondere wobei der Wicklungsträger an die Antenne angespritzt ist. Die Antenne ist vollständig oder teilweise vom Wicklungsträger umgeben. Die Antenne besteht aus mehreren metallischen Wicklungen, insbesondere wobei die Antennenwicklungen als Leiterbahnen auf einer Leiterplatte ausgeführt sind. Von Vorteil ist dabei, dass eine vereinfachte Herstellung ermöglicht ist. Die Antenne wird schon während des Spritzgussprozesses mit dem Wicklungsdraht über einen Wicklungsträger verbunden, wodurch ihre räumliche Position relativ zum Wicklungsdraht festgelegt ist. Dadurch muss sie beim späteren Vergießen mit Vergussmasse nicht in einem separaten Verfahrensschritt ausgerichtet werden. Vorzugsweise weist die Leiterplatte Ausnehmungen, insbesondere vier Ausnehmungen, auf.

Bei einer vorteilhaften Ausgestaltung weist die Wicklungsanordnung Bewehrungsstangen, insbesondere aus glasfaserverstärktem Kunststoff, auf, wobei die Bewehrungsstangen in ihrer Längsrichtung abschnittsweise von mindestens einem Teilbereich eines oder mehrerer Wicklungsträger umgeben sind. Von Vorteil ist dabei, dass die Stabilität der Wicklungsanordnung erhöht ist. Die Bewehrungsstangen werden schon während des Spritzgussprozesses mit dem Wicklungsdraht über mindestens einen Wicklungsträger verbunden, wodurch ihre räumliche Position relativ zum Wicklungsdraht festgelegt ist. Dadurch müssen sie beim späteren Vergießen mit Vergussmasse nicht in einem separaten Verfahrensschritt ausgerichtet werden.

Bei einer vorteilhaften Ausgestaltung weist die Oberfläche der Wicklungsanordnung mehrere Teiloberflächen auf und mindestens ein Wicklungsträger weist mindestens zwei Beabstandungsstege auf, wobei mindestens zwei Beabstandungsstege eines jeweiligen Wicklungsträgers teilweise Oberflächenabschnitte von jeweils verschiedenen Teiloberflächen bilden. Von Vorteil ist dabei, dass ein definierter Abstand zwischen dem Wicklungsdraht und jeweils verschiedenen Teiloberflächen herstellbar ist.

Bei einer vorteilhaften Ausgestaltung ist eine Teiloberfläche der Wicklungsanordnung gekrümmt, insbesondere einem sphärischen Abschnitt entsprechend oder einem elliptisch paraboloiden Abschnitt entsprechend. Von Vorteil ist dabei, dass ein Abfließen von Flüssigkeit von der gekrümmten Oberfläche ermöglicht ist. Besonders vorteilig ist dabei eine konvexe Krümmung, da somit unabhängig von der Montagerichtung ein Abfließen gewährleistet ist.

Bei einer vorteilhaften Ausgestaltung ist der Wicklungsdraht der mindestens einen Wicklung als Litze ausgeführt, insbesondere wobei die Litze als Bündel von gegeneinander elektrisch isolierten Einzeldrähten ausgeführt ist. Von Vorteil ist dabei, geringe Verluste auftreten. Vorteiligerweise ist wird HF-Litze verwendet.

Das Verfahren zur Herstellung einer Wicklungsanordnung weist folgende Schritte auf:
(i) Einlegen der mindestens einen Wicklung in eine erste einteilig oder mehrteilig ausgeführte Spritzgussform,
(ii) Herstellen von Wicklungsträgern durch Umspritzen von Teilbereichen der Windungen mit Kunststoff, insbesondere so dass ein Verbundteil aus Windungen und Wicklungsträgern hergestellt ist,
(iii) Entfernen der Spritzgussform, insbesondere nach Abkühlen und Erstarren des Schmelzklebstoffes,
(iv) Einlegen der mindestens einen Wicklung und der Wicklungsträger in ein Gussformwerkzeug, insbesondere Einlegen des Verbundteils in ein Gussformwerkzeug,
(v) Vergießen, insbesondere zumindest teilweise ausgeführtes Umgießen, der mindestens einen Wicklung und der Wicklungsträger mit Vergussmasse.

Von Vorteil ist dabei, dass das Verfahren einfach und kostengünstig ist. Dadurch, dass das Verbundteil aus Wicklungsdraht und Wicklungsträgern von Vergussmasse durchströmbar ist, ist eine erhöhte Stabilität der Wicklungsanordnung gewährleistet.

Bei einer vorteilhaften Ausgestaltung ist das Gussformwerkzeug zumindest zweiteilig ausgeführt ist. Von Vorteil ist dabei, dass eine vereinfachte Positionierung der Wicklung und der Wicklungsträger, insbesondere des Verbundteils, innerhalb des Gussformwerkzeugs ermöglicht ist. In einer besonders vorteilhaften Ausführung wird das Verbundteil aus Wicklungsdraht und Wicklungsträger in dem ersten Teil des Gussformwerkzeuges positioniert. Anschließend wird das zweite Teil des Gussformwerkzeuges über das Verbundteil gelegt.

Bei einer vorteilhaften Ausgestaltung weist oder weisen ein oder mehrere Wicklungsträger einen oder mehrere Abstandshalterabschnitte auf, wobei das Gussformwerkzeug Aussparungen, insbesondere Ausnehmungen, zur teilweisen Aufnahme der Abstandshalterabschnitte aufweist, insbesondere wobei im Schritt (iv) das Verbundteil mittels der Abstandshalterabschnitte an den Aussparungen positioniert und/oder ausgerichtet wird. Von Vorteil ist dabei, dass eine genaue Positionierung der Wicklung und der Wicklungsträger, insbesondere des Verbundteils, innerhalb des Gussformwerkzeugs ermöglicht ist.

Bei einer vorteilhaften Ausgestaltung ist das Gussformwerkzeug topfförmig ausgebildet ist, insbesondere wobei die Vergussmasse parallel zur Wicklungsebene in das Gussformwerkzeug eingefüllt wird. Von Vorteil ist dabei, dass bei der Montage die Ober- und Unterseite der Wicklungsanordnung eine glatte und definierte Oberfläche aufweisen.

Bei einer vorteilhaften Ausgestaltung ist das Gussformwerkzeug wannenförmig ausgebildet ist, insbesondere wobei die Vergussmasse (60) parallel zur Normalenrichtung der Wicklungsebene in das Gussformwerkzeug (150) eingefüllt wird. Von Vorteil ist dabei, dass eine einfache Herstellung ermöglicht ist.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine schematische Ansicht einer erfindungsgemäßen Wicklungsanordnung in Draufsicht gezeigt.
In der Figur 2 ist eine schematische Ansicht einer alternativen beispielhaften Wicklungsanordnung mit zwei Teilwicklungen in Draufsicht gezeigt.
In der Figur 3 ist eine schematische Ansicht einer weiteren beispielhaften Wicklungsanordnung mit zwei Teilwicklungen in Draufsicht gezeigt.
In der Figur 4 ist eine schematische Ansicht einer weiteren beispielhaften Wicklungsanordnung mit zwei Teilwicklungen in Draufsicht gezeigt, wobei auf die Darstellung aller tatsächlich vorhandenen Wicklungsträger verzichtet wurde.
In der Figur 5 ist eine schematische Ansicht einer weiteren erfindungsgemäßen Wicklungsanordnung mit zwei Teilwicklungen in Draufsicht gezeigt, wobei auf die Darstellung aller tatsächlich vorhandenen Wicklungsträger verzichtet wurde.
In der Figur 6 ist eine beispielhafte Wicklungsanordnung in Draufsicht gezeigt.
In der Figur 7 ist die beispielhafte Wicklungsanordnung aus Figur 6 in Schnittansicht gezeigt.
In der Figur 8 ist eine weitere erfindungsgemäße Wicklungsanordnung in Schnittansicht gezeigt.
In der Figur 9 ist eine weitere erfindungsgemäße Wicklungsanordnung in Draufsicht gezeigt.
In der Figur 10 ist die erfindungsgemäße Wicklungsanordnung aus Figur 9 in Schnittansicht gezeigt.
In der Figur 11 ist eine weitere erfindungsgemäße Wicklungsanordnung in Draufsicht gezeigt.
In der Figur 12 ist die erfindungsgemäße Wicklungsanordnung aus Figur 11 in Schnittansicht gezeigt.
In der Figur 13 ist ein Teil einer weiteren erfindungsgemäßen Wicklungsanordnung in Draufsicht gezeigt.
In der Figur 14 ist ein Teil einer weiteren erfindungsgemäßen Wicklungsanordnung in Draufsicht gezeigt.
Die Figur 15 zeigt schematisch eine erfindungsgemäße Wicklungsanordnung und ein dazugehöriges Gussformwerkzeug in Schnittansicht.
Die Figur 16 zeigt schematisch eine weitere erfindungsgemäße Wicklungsanordnung und ein dazugehöriges Gussformwerkzeug in Schnittansicht.
Die Figur 17 zeigt schematisch eine weitere erfindungsgemäße Wicklungsanordnung und ein dazugehöriges Gussformwerkzeug in Schnittansicht.
Die Figur 18 zeigt schematisch eine weitere erfindungsgemäße Wicklungsanordnung und ein dazugehöriges Gussformwerkzeug in Schnittansicht.
Die Figur 19 zeigt schematisch eine weitere erfindungsgemäße Wicklungsanordnung und ein dazugehöriges Gussformwerkzeug in Schnittansicht.
Die Figur 20 zeigt schematisch eine weitere erfindungsgemäße Wicklungsanordnung in Schnittansicht.

Nachfolgend werden Ausführungsbeispiele der Erfindung anhand der beiliegenden Zeichnungen erläutert, wobei gleiche Bezugzeichen für gleichwirkende Teile verwendet werden und nicht mit jeder Figur erneut beschrieben werden.

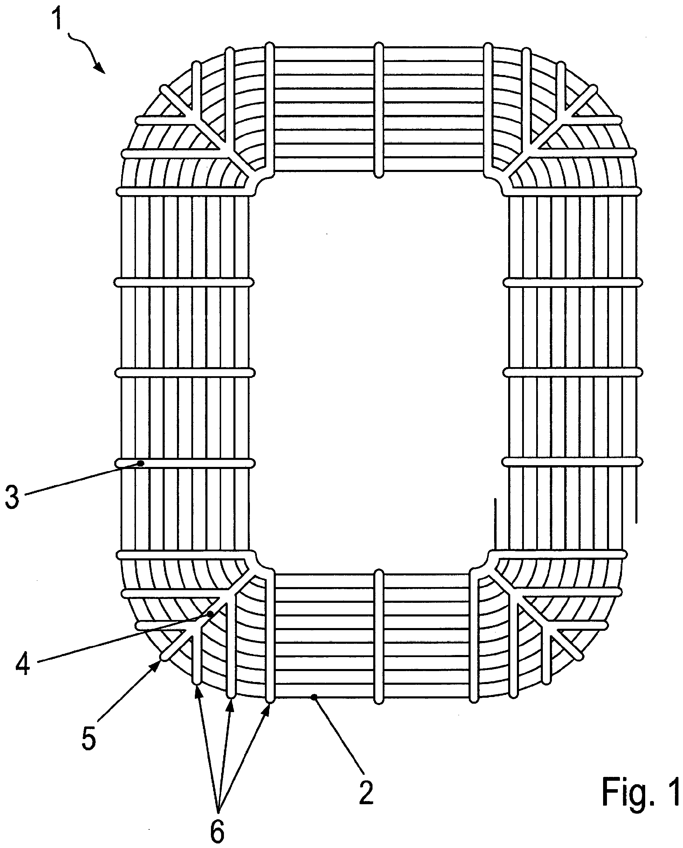

Wie in der Figur 1 gezeigt, besteht die Wicklungsanordnung (1) aus einer Wicklung aus Wicklungsdraht (2) und mehreren Wicklungsträgern (3,4), welche in Umfangsrichtung, also in Wicklungsrichtung, voneinander beabstandet sind.

Die Wicklung weist zehn Windungen auf und ist als Flachwicklung ausgeführt. Der Wicklungsdraht (2) liegt also in einer Ebene, die im Folgenden auch als Wicklungsebene bezeichnet wird. Benachbarte Windungen sind dabei untereinander beabstandet, sie berühren sich also nicht. In diesem Ausführungsbeispiel ist dabei der Abstand zwischen zwei benachbarten Windungen immer gleich. Es sind jedoch auch andere Abstände, beispielsweise von innen nach außen, insbesondere monoton, zunehmende oder abnehmende Abstandswerte, denkbar.

In der vorliegenden Schrift wird die Richtung senkrecht zur Wicklungsebene als Wicklungsachse bezeichnet. Die Flachwicklung ist so ausgeführt, dass sich, in radialer Richtung zur Wicklungsachse gesehen, mit jeder Windung der Abstand zwischen dem entsprechenden Wicklungsdrahtabschnitt der Windung und der Wicklungsachse vergrößert, also eine Spiralwicklung gebildet ist. Im Ausführungsbeispiel der Figur 1 ist die Spiralwicklung mit geradlinigen und abgerundeten Wicklungsabschnitten gezeigt.

Der Wicklungsdraht (2) der Wicklungsanordnung bildet eine Primärwicklung zur berührungslosen Energie- und/oder Datenübertragung an eine in einem Elektrofahrzeug vorgesehene Sekundärwicklung. Die Primärwicklung ist Teil eines Primärteils zur induktiven, also berührungslosen, Aufladung eines in einem Elektrofahrzeug vorgesehenen Energiespeichers.

Die Wicklungsträger (3,4) bestehen aus Schmelzklebstoff und werden in einem Spritzgussverfahren an den Kunststoffmantel des Wicklungsdrahtes angespritzt. Die einzelnen Wicklungsträger (3,4) sind daher stoffschlüssig mit den Windungen des Wicklungsdrahtes (2) verbunden.

Die Wicklungsträger (3,4) dienen dazu, den Wicklungsdraht (2) in seiner räumlichen Anordnung soweit zu fixieren, dass eine vereinfachte Fertigung der Wicklungsanordnung (1) möglich ist. Deshalb ist jeder Wicklungsträger (3,4) mit mindestens zwei Windungen verbunden.

Im Ausführungsbeispiel der Figur 1 sind zwei Arten von Wicklungsträgern (3,4) gezeigt.

Die Wicklungsträger (3) erster Art sind in diesem Ausführungsbeispiel an den geradlinigen Abschnitten der Wicklung angeordnet, während die Wicklungsträger (4) zweiter Art an den gebogenen Umlenkbereichen der Wicklung angeordnet sind. Die gebogenen Umlenkbereiche sind dabei viertelkreisförmig ausgeführt.

Der Wicklungsträger (3) erster Art ist stabförmig ausgeführt, seine Dicke ist also im Vergleich zu seiner Länge sehr viel kleiner. Der Wicklungsträger (3) erster Art ist mit mindestens zwei Windungen an jeweils höchstens einer Stelle, also Verbindungsstelle, verbunden.

Im Ausführungsbeispiel der Figur 1 sind die Wicklungsträger (3) erster Art jeweils mit jeder Windung genau einmal verbunden und dabei so innerhalb der Wicklungsebene orientiert, dass ihre Länge senkrecht zur Wicklungsrichtung verläuft. Bei weiteren erfindungsgemäßen Ausführungsbeispielen sind die Wicklungsträger (3) erster Art jeweils nur mit einem Teil der Windungen verbunden und/oder die Orientierung der Länge des Wicklungsträgers (3) erster Art relativ zur Wicklungsrichtung ist nicht senkrecht.

Der Wicklungsträger (4) zweiter Art weist eine tannenbaumförmige Struktur mit einem Stamm (5) und Ästen (6) auf. Stamm (5) und Äste (6) sind dabei jeweils als stabförmige Abschnitte ausgeführt und werden im Folgenden als Hauptkörper (5) und Seitenarme (6) bezeichnet. Der Hauptkörper (5) ist dabei so innerhalb der Wicklungsebene orientiert, dass seine Länge senkrecht zur Wicklungsrichtung des entsprechenden Drahtabschnittes der Verbindungsstelle verläuft. Die Seitenarme (6) gehen innerhalb der Wicklungsebene von beiden Seiten des Hauptkörpers in einem 45° Winkel ab.

Sowohl Hauptkörper (5) als auch Seitenarme (6) sind höchstens einmal mit einer jeweiligen Windung verbunden. Der Wicklungsträger (4) zweiter Art ist dadurch mehrfach an in Umfangsrichtung, also Wicklungsrichtung, beabstandeten Stellen, also Verbindungsstellen, mit den jeweiligen Windungen verbunden. So weist die äußerste Windung beispielsweise sieben Verbindungsstellen zu einem Wicklungsträger (4) zweiter Art auf. Unter Verbindungsstelle wird dabei derjenige Raumbereich verstanden, in welchem ein Wicklungsdrahtabschnitt und ein Wicklungsträger in Kontakt stehen. Die Verbindungsstelle ist also ein insbesondere in Umfangsrichtung ausgedehnter Raumbereich. Zwischen zwei benachbarten und beabstandeten Verbindungsstellen befindet sich dabei in Umfangsrichtung lediglich der entsprechende Wicklungsdrahtabschnitt und daher insbesondere kein Material des Wicklungsträgers.

Die Wicklungsträger (3,4) sind alle einstückig, also einteilig, ausgeführt. Sie werden in einem Spritzgussverfahrensschritt hergestellt, also ausgeformt.

Für alle Wicklungsträger (3,4) gilt, dass das Material der Wicklungsträger an der Verbindungsstelle den Wicklungsdraht der entsprechenden Windung ringförmig umschließt. Der Wicklungsdraht weist also an jeder Verbindungsstelle einen vollständig vom Material der Wicklungsträger (3, 4, 50, 90, 130, 140) umschlossenen Querschnitt auf.

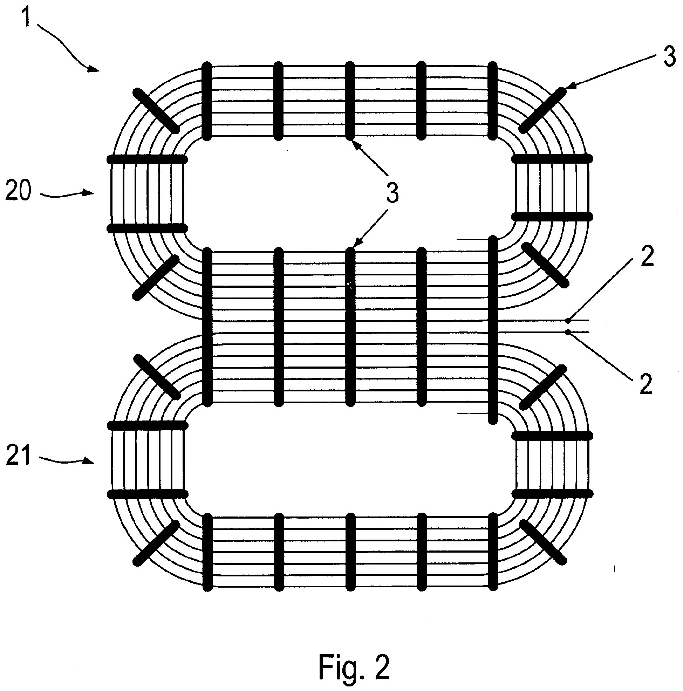

Bei dem in Figur 2 gezeigten alternativen Beispiel besteht die Wicklungsanordnung (1) aus zwei Teilwicklungen (20, 21), welche jeweils die gleiche umwickelte Fläche und gleiche Windungszahl, aber entgegengesetzten Wicklungssinn aufweisen. Beide Teilwicklungen sind als flache Sprialwicklung ausgeführt.

Die Wicklungsanordnung (1) weist ausschließlich Wicklungsträger (3) erster Art auf, welche zur Vereinfachung im Folgenden für Figur 2 lediglich als Wicklungsträger (3) bezeichnet werden. Die Wicklungsträger (3) jeder Teilwicklung sind voneinander in Umfangsrichtung beabstandet und sowohl an den geradlinigen Abschnitten als auch an den gebogenen Umlenkbereichen angeordnet.

Die Wicklungsträger (3) sind innerhalb der Wicklungsebene jeweils so orientiert, dass ihre Länge an der Verbindungsstelle jeweils senkrecht zur Wicklungsrichtung verläuft.

Die Anzahl der Verbindungsstellen variiert dabei für einzelne Wicklungsträger (3). So sind die Wicklungsträger (3) an den gebogenen Umlenkbereichen lediglich mit einem Teil der Windungen verbunden, wohingegen die Wicklungsträger an den geradlinigen Abschnitten mit allen Windungen verbunden sind. Dort, wo die beiden Teilwicklungen (20, 21) benachbart sind, sind die Wicklungsträger mit allen Windungen beider Teilwicklungen verbunden.

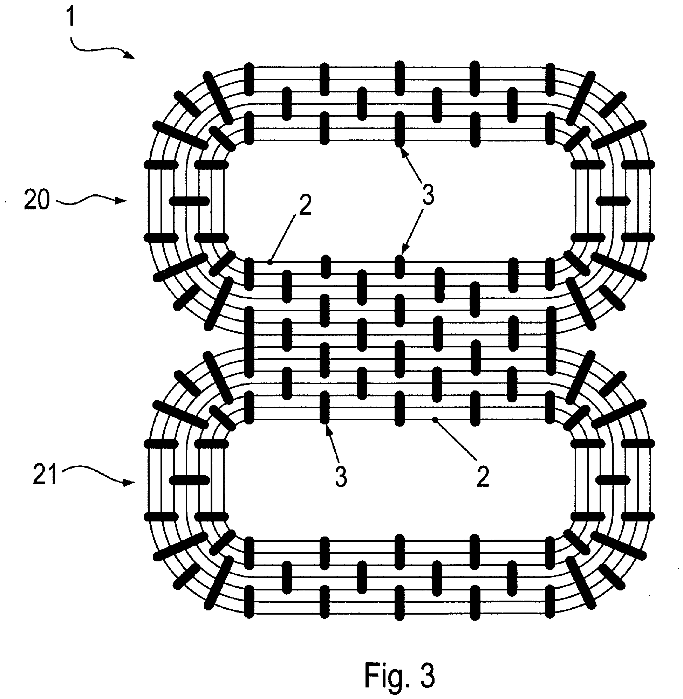

Bei den in den Figuren 3 bis 5 gezeigten weiteren Beispielen und Ausführungsformen besteht die Wicklungsanordnung ebenfalls aus zwei Teilwicklungen (20, 21), welche jeweils die gleiche umwickelte Fläche und gleiche Windungszahl, aber entgegengesetzten Wicklungssinn aufweisen.
Die zwei Teilwicklungen (20, 21) der Figuren 3 bis 5 sind schematisch jeweils als Menge von ineinander geschachtelten, abgerundeten Rechtecken gezeichnet. Diese stehen schematisch für die in Figur 2 gezeigten ebenen Spiralwicklungen.

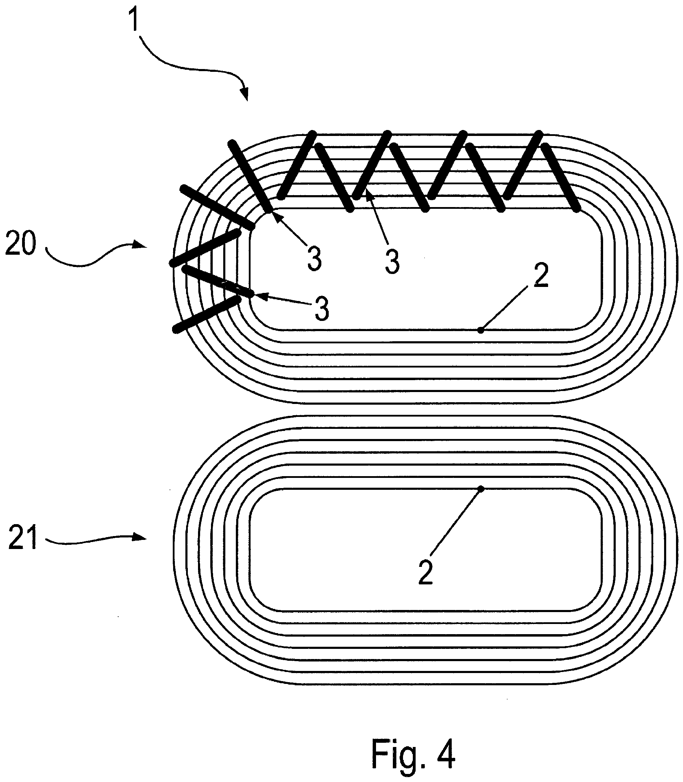

Die Wicklungsanordnungen (1) der Figuren 3 und 4 weisen jeweils ausschließlich Wicklungsträger (3) erster Art auf, welche zur Vereinfachung im Folgenden jeweils lediglich als Wicklungsträger (3) bezeichnet werden. Die Wicklungsträger (3) sind jeweils voneinander beabstandet und sowohl an den geradlinigen Abschnitten als auch an den gebogenen Umlenkbereichen der beiden Teilwicklungen (20, 21) angeordnet.

Bei der in Figur 3 gezeigten Wicklungsanordnung (1) variiert die Anzahl der Verbindungspunkte für einzelne Wicklungsträger (3). Jeder Wicklungsträger (3) ist jedoch zumindest mit zwei, insbesondere zumindest drei, Windungen der ersten Teilwicklung (20) und/oder zweiten Teilwicklung (21) verbunden. Die Wicklungsträger (3) sind innerhalb der Wicklungsebene jeweils so orientiert, dass ihre Länge an der Verbindungsstelle jeweils senkrecht zur Wicklungsrichtung verläuft.

Bei der in Figur 4 gezeigten Wicklungsanordnung (1) ist jeder Wicklungsträger wiederum mit zumindest zwei Windungen der ersten Teilwicklung (20) oder zweiten Teilwicklung (21) verbunden. In der Figur 4 sind nicht alle tatsächlich vorhandenen Wicklungsträger gezeigt, sondern es sind lediglich die Wicklungsträger für einen Bereich der Wicklungsanordnung gezeigt.

Die Wicklungsträger (3) sind innerhalb der Wicklungsebene jeweils so orientiert, dass ihre Länge an der Verbindungsstelle jeweils nicht senkrecht, sondern schräg zur Wicklungsrichtung verläuft. Dabei sind an den geradlinigen Abschnitten der Teilwicklungen (20, 21) jeweils zwei übernächste Wicklungsträger (3) ihrer Länge nach parallel angeordnet.

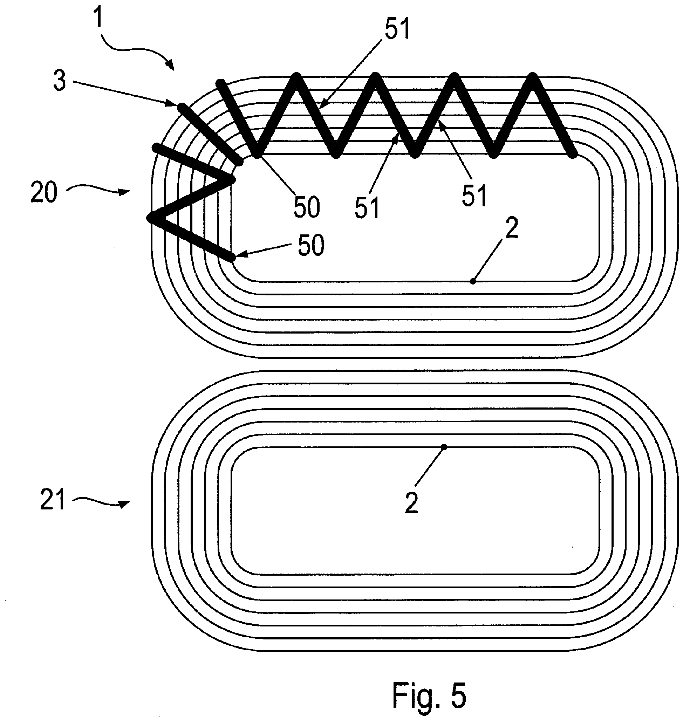

Die in Figur 5 gezeigte Wicklungsanordnung (1) weist neben Wicklungsträgern (3) erster Art auch Wicklungsträger (50) dritter Art auf, welche an den geradlinigen Abschnitten der Teilwicklungen (20, 21) angeordnet und aus mehreren stabförmigen Abschnitten (51) zusammengesetzt sind. In der Figur 5 sind nicht alle tatsächlich vorhandenen Wicklungsträger gezeigt, sondern es sind lediglich die Wicklungsträger für einen Bereich der Wicklungsanordnung gezeigt.

Die stabförmigen Abschnitte (51) liegen jeweils in der Wicklungsebene. Dabei sind jeweils zwei übernächste stabförmige Abschnitte (51) ihrer Länge nach parallel angeordnet, sie bilden also eine Zick-Zack-Struktur.

Der Wicklungsträger (50) dritter Art ist mehrfach an in Umfangsrichtung, also Wicklungsrichtung, beabstandeten Verbindungsstellen mit den jeweiligen Windungen verbunden. Die Anzahl der stabförmigen Abschnitte des Wicklungsträgers (50) dritter Art ist variabel, so zeigt Figur 5 beispielsweise einen Wicklungsträger (50) dritter Art mit drei und einen mit neun stabförmigen Abschnitten (51).

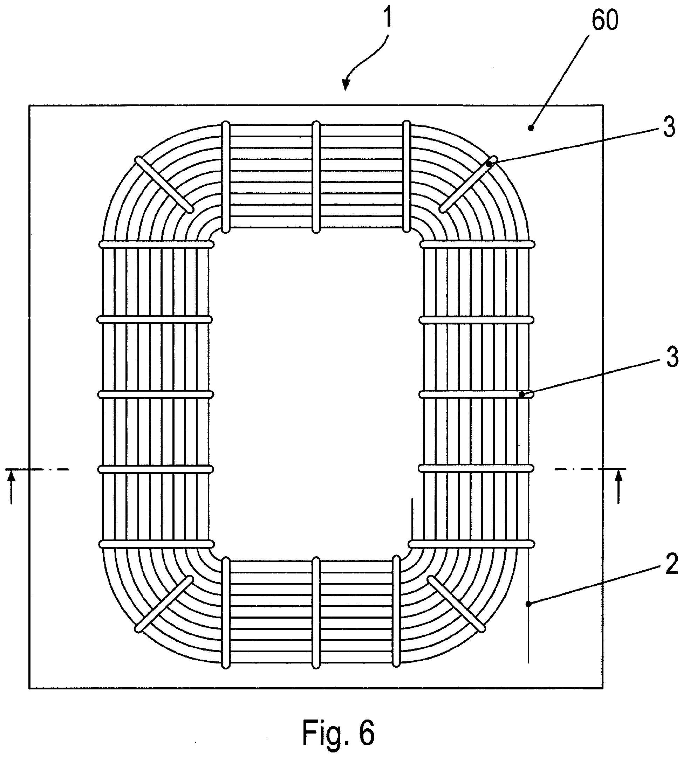

Die Wicklungsanordnung (1) der Figur 6 weist neben dem Wicklungsdraht (2) der Wicklung und den Wicklungsträgern (3) erster Art, im Folgenden lediglich als Wicklungsträger (3) bezeichnet, noch Vergussmasse (60) aus Polymerbeton auf.

Der Wicklungsdraht (2) der Wicklung samt Wicklungsträgern (3) ist komplett von der Vergussmasse (60) umgeben. Der Raum zwischen den einzelnen Windungen ist ebenfalls von Vergussmasse (60) ausgefüllt.

Bei weiteren erfindungsgemäßen Ausführungsbeispielen besteht die Vergussmasse aus Beton oder Reaktionsharz mit zusätzlichen Füllstoffen und/oder Additiven. Grundsätzlich ist jedes vergießbare Material als Vergussmasse geeignet.

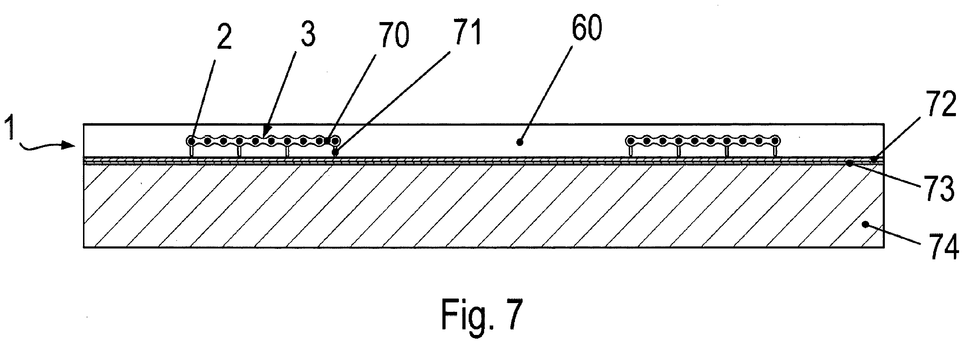

Figur 7 zeigt eine Schnittansicht der Wicklungsanordnung (1) aus Figur 6. Die Schnittebene ist in Figur 6 durch Pfeile angedeutet.

Die Wicklungsträger (3) bestehen jeweils aus einem Grundkörper (70) und Beabstandungsstegen (71). Der Wicklungsdraht (2) ist in der Schnittebene jeweils rinförmig, also komplett, vom Grundkörper (70) umgeben.

Die Beabstandungsstege (71) ermöglichen eine Herstellung der Wicklungsvorrichtung (1) in der Weise, dass der Wicklungsdraht (2) und die Grundkörper (70) einen definierten Abstand von der äußeren Oberfläche der Vergussmasse (60) aufweisen.

Die Oberfläche der Wicklungsanordnung (1) wird in diesem Beispiel durch jeweilige Oberflächenabschnitte der Beabstandungsstege (71) und den außen liegenden Oberflächenabschnitten der Vergussmasse (60) gebildet. Somit sind sowohl Wicklungsdraht (2) als auch die Grundkörper (70) der Wicklungsträger (3) von der Oberfläche der Wicklungsanordnung (1) beabstandet. Die Oberfläche der Wicklungsanordnung (1) ist in diesem Beispiel quaderförmig ausgeführt.

Die einzelnen Wicklungsträger (3) werden in einem Spritzgussverfahren hergestellt. Jeder Wicklungsträger ist somit einstückig ausgeführt, d.h. dass der Grundkörper (70) und die Beabstandungsstege (71) in einem Stück enthalten sind. Zur Bildung eines Primärteils zur induktiven, also berührungslosen, Beladung eines Elektrofahrzeugs ist es vorteilhaft, wenn an der Unterseite der Wicklungsanordnung (1) eine Ferritschicht (72) und eine Aluminiumschicht (73) angeordnet sind. Die Schichten sind jeweils als feste Platten ausgeführt. Die Ferritschicht (72) besteht dabei aus Ferritplatten und Folien, wobei die Ferritplatten beidseitig mit jeweils einer Folie stoffschlüssig verbunden sind. Zur besseren mechanischen Stabilisierung sind die Wicklungsanordnung (1), Ferritschicht (72) und Aluminiumschicht (73) wiederum auf einem Träger (74) angeordnet, welcher ebenfalls aus Vergussmasse (60), insbesondere Polymerbeton, ausgeführt ist. Die einzelnen Bauteile sind dabei miteinander verklebt, also stoffschlüssig miteinander verbunden.

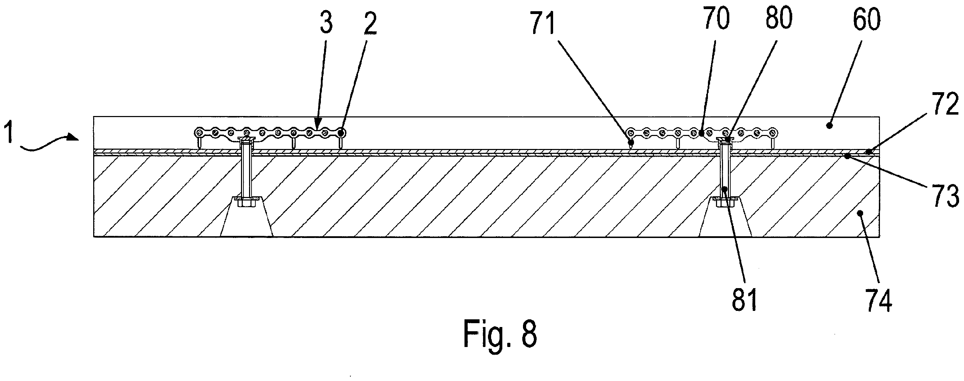

Figur 8 zeigt eine alternative erfindungsgemäße Wicklungsanordnung (1) in Schnittansicht. Die dargestellten Wicklungsträger (3) bestehen hier jeweils aus einem Grundkörper (70), jeweils drei Beabstandungsstegen (71) und jeweils einem Verbindungselement (80).

Das Verbindungselement (80) ist als metallische Gewindebuchse ausgeführt. Der Wicklungsträger (3) ist als Verbundteil aus einem Kunststoffteil (70, 71) und einem metallischen Verbindungselement (80) ausgeführt. Das Verbindungselement (80) ist dabei formschlüssig mit dem Wicklungsträger (3) verbunden.

Das Verbindungselement (80) weist eine Öffnung auf, welche durch einen Abschnitt des Verbindungselementes berandet wird. Dieser Abschnitt bildet einen Teil der Oberfläche der Wicklungsanordnung (1), neben den äußeren Oberflächenabschnitten der Vergussmasse (60) und den jeweiligen Abschnitten der Beabstandungsstege.

Wie in Figur 8 gezeigt, ist das Verbindungselement (80) an der Oberfläche des Wicklungsträgers (3) weniger breit ausgeführt ist als im Inneren des Wicklungsträgers (3), insbesondere als in einem von der Oberfläche des Wicklungsträgers (3) beabstandeten Bereich im Inneren des Wicklungsträgers.

Bei einer alternativen Ausführung weist das Verbindungselement (80) einen widerhakenartigen Abschnitt und/oder Ankerabschnitt im Inneren des Wicklungsträgers (3) auf. Dadurch wird verhindert, dass sich das Verbindungselement (80) vom Wicklungsträger (3) löst.

In diesem Ausführungsbeispiel wird die Oberfläche der Wicklungsanordnung (1) durch die äußere Oberfläche der Vergussmasse (60), sowie durch die außen liegenden Oberflächenabschnitte der Beabstandungsstege (71) und der Verbindungselemente (80) gebildet. Die Grundkörper (70) und der Wicklungsdraht (2) sind von der Oberfläche der Wicklungsanordnung (1) beabstandet.

Durch die in die Wicklungsanordnung (1) integrierten Verbindungselemente (80) ist es möglich, die anderen Bauteile des Primärteils, wie Ferritschicht (72), Aluminiumschicht (73) und Träger (74), mittels eines Befestigungsmittels (81) auf einfache Weise zu verbinden, insbesondere kraft- oder formschlüssig. Das Befestigungsmittel (81) ist in diesem Ausführungsbeispiel als Schraube ausgeführt.

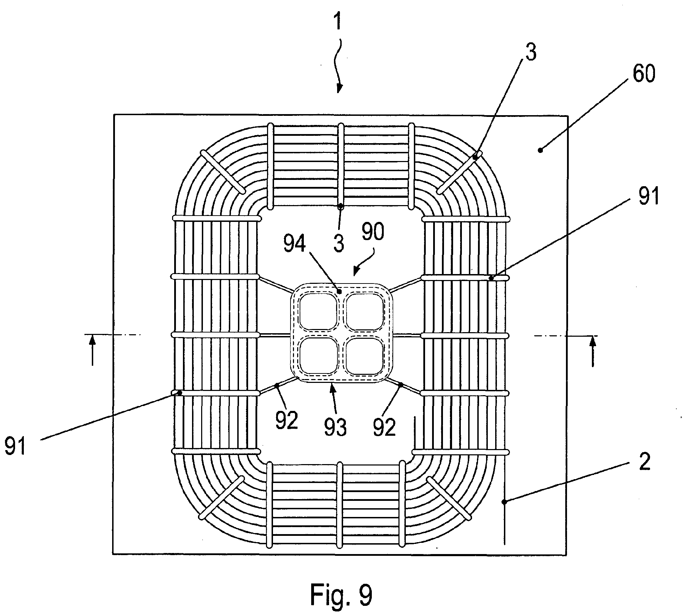

In der Figur 9 ist eine alternative erfindungsgemäße Wicklungsanordnung (1) in Draufsicht gezeigt. Diese weist neben Wicklungsträgern (3) erster Art noch einen Wicklungsträger (90) vierter Art auf. Dieser Wicklungsträger (90) besteht aus sechs äußeren Gründkörpern (91), von welchen jeweils ein Verbindungssteg (92) zu einem mittleren Grundkörper (93) führt. Der mittlere Grundkörper wiederum umgibt eine Antenne (94), die zu einem System zur Positionierung eines Elektrofahrzeuges und/oder zur Kommunikation mit einem Elektrofahrzeug gehört, das an seiner Unterseite eine Sekundärwicklung aufweist, welche induktiv koppelbar ist mit der Flachwicklung und somit induktiv, also berührungslos, mit elektrischer Leistung versorgbar ist, insbesondere zum Aufladen eines Energiespeichers des Fahrzeugs. Dabei ist die Antenne (94) mit einer elektronischen Schaltung verbunden, welche die für die Positionierung und/oder Datenübertragung notwendigen zu übertragenden Signale erzeugt.

Die Antenne besteht aus mehreren metallischen Wicklungen, wobei die Antennenwicklungen als Leiterbahnen auf einer Leiterplatte ausgeführt sind. In diesem Ausführungsbeispiel weist die Leiterplatte vier rechteckförmige Ausnehmungen auf.

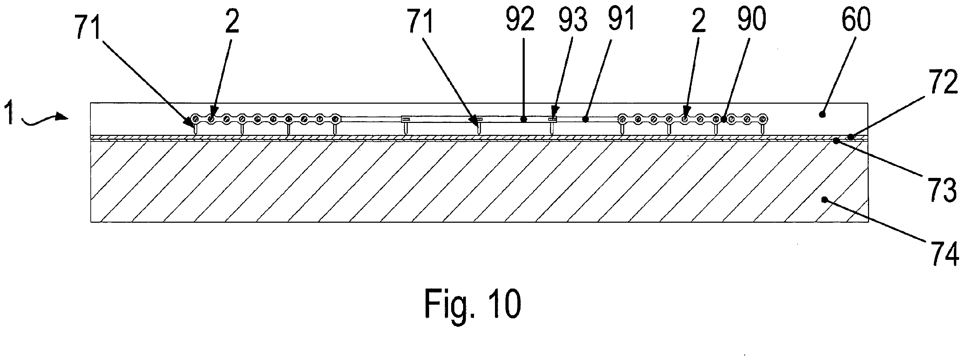

Die Figur 10 zeigt eine entsprechende Schnittansicht der Ausführung aus Figur 9. Die Schnittebene ist in Figur 9 durch Pfeile angedeutet.

Sowohl die äußeren (91) als auch der mittlere Grundkörper (93) des Wicklungsträgers (90) vierter Art weisen Beabstandungsstege (71) auf, so dass der Wicklungsdraht (2) und die Antenne (94) einen definierten Abstand von der Oberfläche der Wicklungsanordnung (1) haben. In diesem Ausführungsbeispiel wird die Oberfläche der Wicklungsanordnung (1) durch die äußere Oberfläche der Vergussmasse (60) und die äußeren Oberflächenabschnitte der Beabstandungsstege (71) gebildet.

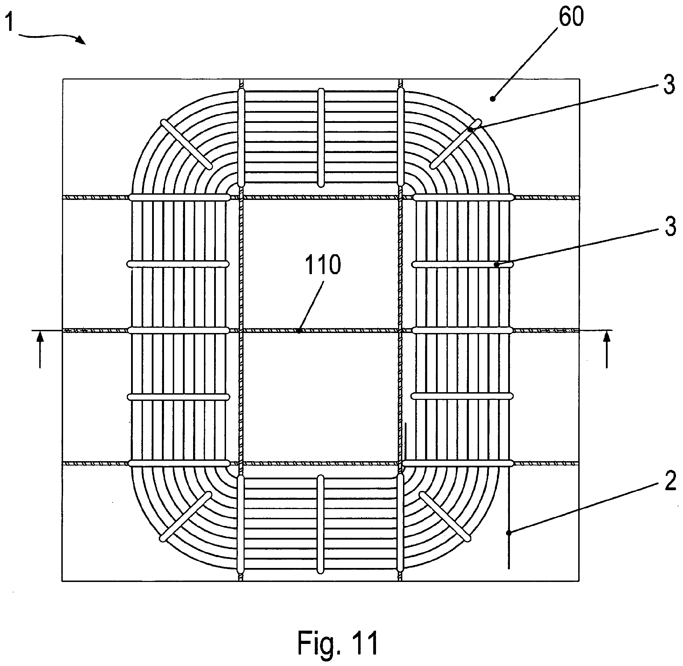

Im Ausführungsbeispiel der Figur 11 weist die Wicklungsanordnung (1) Bewehrungsstangen (110) auf, welche aus glasfaserverstärktem Kunststoff ausgeführt sind. Die Bewehrungsstangen (110) bilden ein Gitter innerhalb der Vergussmasse (60), welches eine erhöhte mechanische Stabilität gewährleistet. Die Bewehrungsstangen (110) sind abschnittsweise vollständig mit Kunststoff umspritzt und daher stoffschlüssig und formschlüssig mit den Grundkörpern (70) der Wicklungsträger (3) erster Art verbunden.

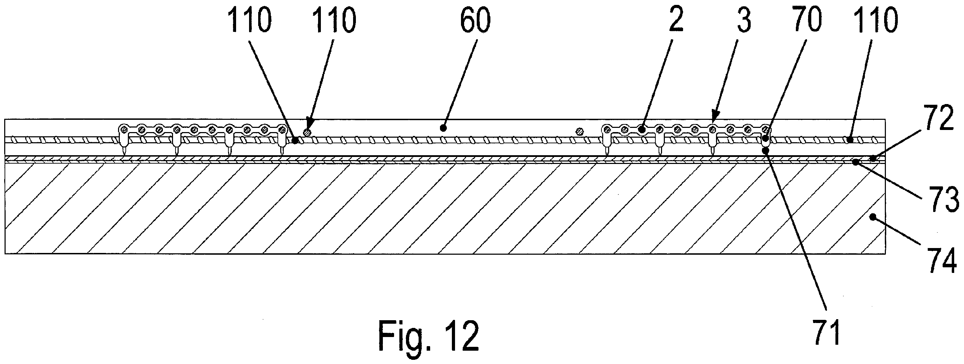

Die Figur 12 zeigt eine entsprechende Schnittansicht der Ausführung aus Figur 11. Die Schnittebene ist in Figur 11 durch Pfeile angedeutet.

Die Grundkörper (70) der Wicklungsträger (3) erster Art weisen wiederum Beabstandungsstege (71) auf, so dass der Wicklungsdraht und die Bewehrungsstangen (110) einen definierten Abstand von der Oberfläche der Wicklungsanordnung (1) haben. In diesem Ausführungsbeispiel wird die Oberfläche der Wicklungsanordnung (1) durch die äußere Oberfläche der Vergussmasse (60) und die äußeren Oberflächenabschnitte der Beabstandungsstege (71) gebildet.

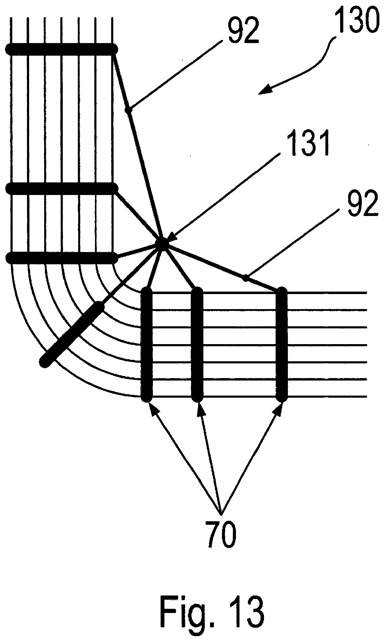

In der Figur 13 ist ein Wicklungsträger (130) fünfter Art gezeigt, welcher aus mehreren Grundkörpern (70) besteht. Von den Grundkörpern (70) geht jeweils ein dünner Verbindungssteg (92) ab. Alle Verbindungsstege (130) münden an einer gemeinsamen Verbindungsstelle, welcher auch als Einspritzpunkt (131) bezeichnet wird.

Vorteilhafterweise erfolgt der während der Herstellung das Einspritzen des flüssigen Kunststoffes am Einspritzpunkt (131), so dass mehrere Grundkörper (70) in einem Fertigungsschritt hergestellt werden können.

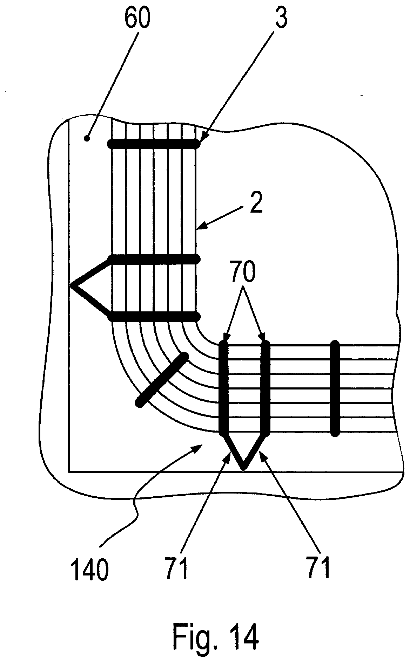

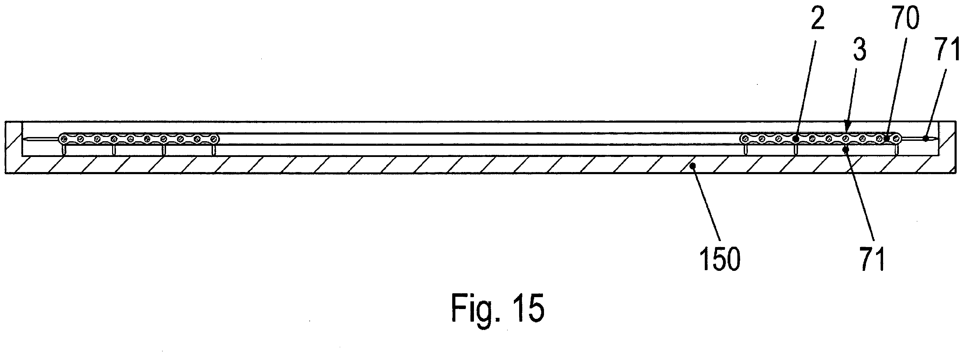

In der Figur 14 sind Wicklungsträger (140) sechster Art gezeigt, welche aus zwei Grundkörpern (70) bestehen. Die Grundkörper (70) wiederum sind durch Beabstandungsstege (71) miteinander verbunden. Die Beabstandungsstege (71) der Wicklungsträger ermöglichen die Positionierung des Wicklungsdrahtes (2) innerhalb eines Gussformwerkzeuges (150) zur Herstellung der Wicklungsanordnung (1), wie später anhand von Figur 15 erläutert wird.

Im Folgenden wird das Verfahren zur Herstellung der Wicklungsanordnung (1) erläutert.

Zunächst wird der Wicklungsdraht (2) in eine nicht gezeigte Spritzgussform eingelegt. Diese Spritzgussform weist neben Aussparungen für den Wicklungsdraht (2) auch noch Aussparungen für die Wicklungsträger (3, 4, 50, 90, 130, 140) auf. Die Spritzgussform ist zweiteilig ausgeführt. Bei anderen Ausführungsbeispielen sind aber auch einteilige oder mehrteilige Ausführungen der Spritzgussform möglich.

Nach dem Einlegen des Wicklungsdrahtes (2) in die Spritzgussform und anschließendem Verbinden der mindestens zwei Teile der Spritzgussform wird der heiße und flüssige Schmelzklebstoff in Öffnungen der Spritzgussform gespritzt, um die Wicklungsträger zu bilden. Die Wicklungsträger werden also durch Umspritzen von Teilbereichen der Windungen mit Schmelzklebstoff hergestellt.

Nach Abkühlen und Erstarren des Kunststoffes wird die Spritzgussform entfernt. Als Produkt des Spritzgussprozesses entsteht ein Verbundteil aus Windungen und Wicklungsträgern.

Der Wicklungsdraht (2) mit angespritzten Wicklungsträgern (3, 4, 50, 90, 130, 140), also das Verbundteil, wird dann, wie in Figur 15 schematisch dargestellt, in ein Gussformwerkzeug (150) gelegt. Im Ausführungsbeispiel der Figur 15 besitzen die Wicklungsträger (3) erster Art sowohl Beabstandungsstege (71) senkrecht zur Wicklungsebene als auch welche parallel zur Wicklungsebene. Dadurch wird ein definiertes Positionieren des Wicklungsdrahtes (2) innerhalb des Gussformwerkzeuges (150) ermöglicht.

Das Gussformwerkzeug (150) im Ausführungsbeispiel der Figur 15 ist als nach oben, also entgegen der Gravitationsrichtung, offener Quader ausgeführt. Es ist also wannenförmig ausgeführt, um ein Einfüllen von flüssiger Vergussmasse (60) zu ermöglichen. Wannenförmig ist dadurch definiert, dass ein Behältnis eine insbesondere nach oben gerichtete Öffnung und eine Tiefe aufweist, wobei die räumliche Ausdehnung der Öffnung in jeder Richtung innerhalb der Öffnungsebene betragsmäßig größer, insbesondere sehr viel größer, als die Tiefe des Behältnisses ist.

Im Ausführungsbeispiel der Figur 15 erfolgt das Einfüllen der Vergussmasse (60) im Wesentlichen parallel zur Normalenrichtung der Wicklungsebene. Die Vergussmasse umschließt dabei die Windungen und zumindest teilweise die Wicklungsträger (3). Die Oberfläche der hergestellten Wicklungsanordnung wird durch Vergussmasse und Teilbereichen der Beabstandungsstege (71) gebildet.

Nach Einfüllen und Erstarren der Vergussmasse (60) wird das Gussformwerkzeug (150) entfernt. Die Öffnung des Gussformwerkzeuges (150) bleibt während des Erstarrungsprozesses der Vergussmasse (60) unverschlossen. Gegebenenfalls muss nach Einfüllen der Vergussmasse (60) die Oberfläche glattgestrichen werden.

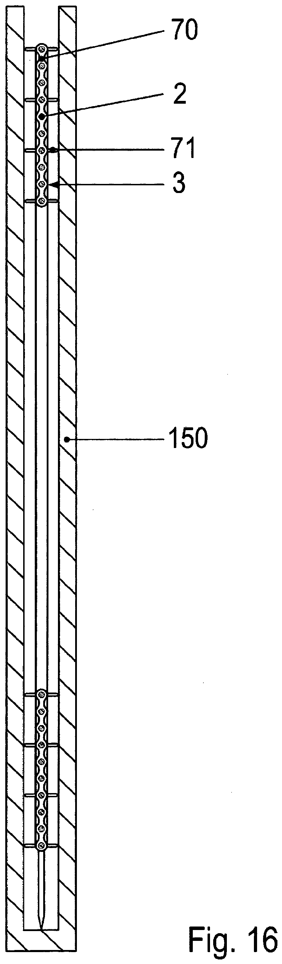

Während beim Ausführungsbeispiel der Figur 15 das Einfüllen der Vergussmasse (60) parallel zur Normalenrichtung der Wicklungsebene erfolgt, wird beim Ausführungsbeispiel der Figur 16 die Vergussmasse (60) parallel zur Wicklungsebene eingefüllt. Hier ist das Gussformwerkzeug ebenfalls als nach oben offener Quader ausgebildet; es ist jedoch topfförmig ausgebildet. Topfförmig ist dadurch definiert, dass ein Behältnis eine insbesondere nach oben gerichtete Öffnung und eine Tiefe aufweist, wobei die räumliche Ausdehnung der Öffnung in zumindest einer Richtung innerhalb der Öffnungsebene betragsmäßig kleiner, insbesondere sehr viel kleiner, als die Tiefe des Behältnisses ist.

Der Wicklungsdraht (2) samt Wicklungsträgern (3, 4, 50, 90, 130, 140) wird parallel zur Wicklungsebene in das Gussformwerkzeug (150) eingeführt. Die Öffnung des Gussformwerkzeuges (150) wird auch hier beim Erstarrungsprozess nicht verschlossen und muss gegebenenfalls vor der Erstarrung glattgestrichen werden. Die an der Luft zu trocknende Oberfläche ist im Ausführungsbeispiel der Figur 16 geringer als die im Ausführungsbeispiel der Figur 15.

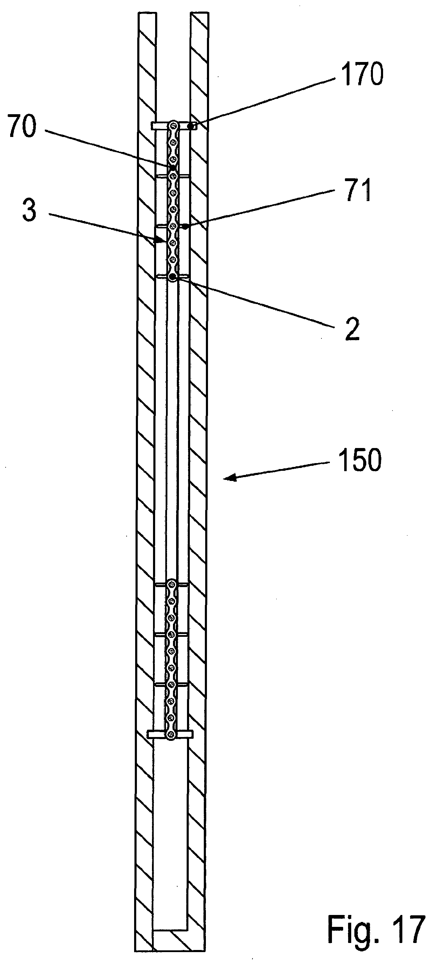

Im Ausführungsbeispiel der Figur 17 erfolgt das Einfüllen der Vergussmasse (60) ebenfalls parallel zur Wicklungsebene des Wicklungsdrahtes (2). Zur Positionierung Wicklungsdrahtes (2) dienen hier zusätzliche Abstandshalterabschnitte (170), welche Teil der jeweiligen Wicklungsträger (3, 4, 50, 90, 130, 140) sind. Die Wicklungsträger (3, 4, 50, 90, 130, 140) weisen also Abstandshalterabschnitte (170) auf. Die Abstandshalterabschnitte greifen in entsprechende Aussparungen des Gussformwerkzeuges (150), so dass ein Verschieben parallel zur Wicklungsebene nicht möglich ist. Das Verbundteil wird also mittels der Abstandshalterabschnitte an den Aussparungen positioniert, also ausgerichtet.

Damit der Wicklungsdraht (2) mit den Wicklungsträgern (3, 4, 50, 90, 130, 140) in das Gussformwerkzeug (150) eingesetzt werden kann, muss dieses mehrteilig, beispielsweise zweiteilig wie in Figur 17 gezeigt, ausgeführt sein.

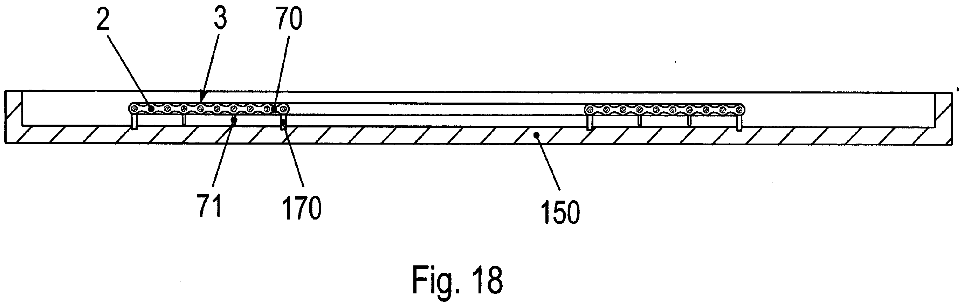

Figur 18 zeigt eine ähnliche Ausführungsform wie Figur 15. Auch hier wird die Vergussmasse (60) senkrecht zur Wicklungsebene eingefüllt. Zur Positionierung des Wicklungsdrahtes (2) in Richtung parallel zur Wicklungsebene dienen hier jedoch keine Beabstandungsstege (71) wie in Figur 15, sondern Abstandshalterabschnitte (170), welche in entsprechende Aussparungen der Gussformwerkzeuges (150) greifen.

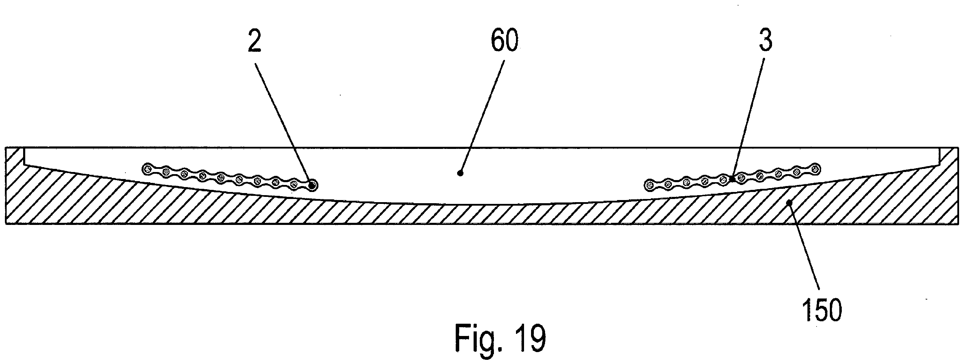

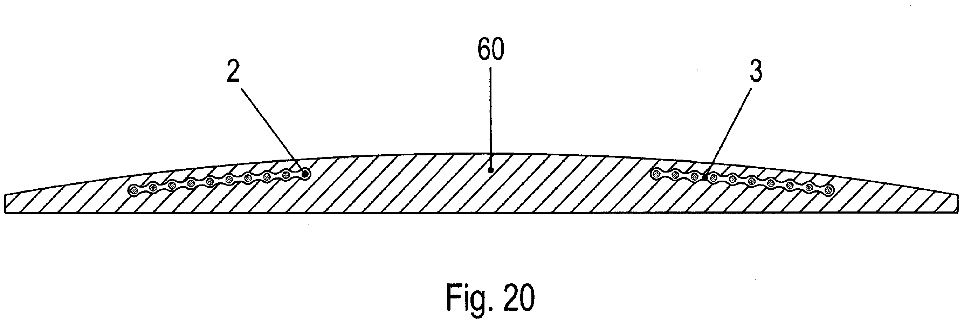

In Figur 19 ist eine weitere Ausführungsform gezeigt. Das Gussformwerkzeug (150) ist zwar ebenfalls wannenförmig ausbildet, seine innere Oberfläche ist jedoch nicht eben sondern gekrümmt, insbesondere einem sphärischen Abschnitt entsprechend oder einem elliptisch paraboloiden Abschnitt entsprechend, ausgeführt. Nach dem Einfüllen und Erstarren der Vergussmasse (60) wird das Gussformwerkzeug (150) entfernt und die Wicklungsanordnung (1) so gedreht, dass die gekrümmte Oberfläche nach oben zeigt. Dies ist in Figur 20 gezeigt.

In weiteren erfindungsgemäßen Ausführungen weisen die Wicklungsträger der Wicklungsanordnung (1), welche eine gekrümmte Teiloberfläche besitzt, ebenfalls Beabstandungsstege (71) auf.

### Bezugszeichenliste

- 1: Wicklungsanordnung
- 2: Wicklung
- 3: Wicklungsträger erster Art
- 4: Wicklungsträger zweiter Art
- 5: Hauptkörper des Wicklungsträgers (4) zweiter Art
- 6: Seitenarm des Wicklungsträgers (4) zweiter Art
- 20: Erste Teilwicklung
- 21: Zweite Teilwicklung
- 50: Wicklungsträger dritter Art
- 51: Stabförmiger Abschnitt eines Wicklungsträgers (50) dritter Art
- 60: Vergussmasse
- 70: Grundkörper eines Wicklungsträgers (3, 4, 50, 90, 130, 140)
- 71: Beabstandungssteg
- 72: Ferritschicht
- 73: Aluminiumschicht
- 74: Träger
- 80: Verbindungselement
- 81: Befestigungsmittel
- 90: Wicklungsträger vierter Art
- 91: Äußerer Grundkörper eines Wicklungsträgers (90) vierter Art
- 92: Verbindungssteg
- 93: Mittlerer Grundkörper eines Wicklungsträgers (90) vierter Art
- 94: Antenne
- 110: Bewehrungsstange
- 130: Wicklungsträger fünfter Art
- 131: Einspritzpunkt
- 140: Wicklungsträger sechster Art
- 150: Gussformwerkzeug
- 170: Abstandshalterabschnitt

## Patentansprüche

1. Wicklungsanordnung (1) für ein Primärteil zur berührungslosen Energie- und/oder Signalübertragung an ein in einem Elektrofahrzeug vorgesehenes Sekundärteil, aufweisend
mindestens eine Wicklung aus Wicklungsdraht (2) und zwei oder mehr Wicklungsträger (3, 4, 50, 90, 130, 140),
wobei die mindestens eine Wicklung mehrere Windungen, insbesondere also mehrere Wicklungsdrahtabschnitte, aufweist,
wobei die mindestens eine Wicklung als Spiralwicklung ausgeführt ist,
wobei jeder Wicklungsträger (3, 4, 50, 90, 130, 140) mit mindestens zwei Windungen verbunden ist und
jede Windung mit mindestens einem Wicklungsträger (3, 4, 50, 90, 130, 140) verbunden ist, wobei die, insbesondere alle, Wicklungsträger (3, 4, 50, 90, 130, 140) jeweils voneinander beabstandet sind,
wobei die, insbesondere alle, Windungen der mindestens einen Wicklung jeweils voneinander beabstandet sind,
wobei eine erste Windung mit einem ersten der Wicklungsträger (4, 50, 90, 130, 140) verbunden ist,
wobei die erste Windung in Umfangsrichtung, also Wicklungsrichtung, mehrfach an voneinander beabstandeten Stellen mit dem ersten Wicklungsträger (4, 50, 90, 130, 140) verbunden ist,
**dadurch gekennzeichnet, dass**
die Wicklungsträger (3, 4, 50, 90, 130, 140) jeweils stoffschlüssig mit den Windungen an Verbindungstellen verbunden sind,
wobei der Wicklungsdraht an jeder Verbindungsstelle einen vollständig vom Material der Wicklungsträger **(3, 4, 50, 90, 130, 140)** umschlossenen Querschnitt aufweist.

2. Wicklungsanordnung (1) nach Anspruch 1,
**dadurch gekennzeichnet, dass**
**sich der in Richtung zur Wicklungsachse vorliegende, insbesondere minimale, Abstand des Wicklungsdrahtes zwischen benachbarten Windungen mit zunehmender Windungsanzahl verändert,** insbesondere **monoton abnimmt oder zunimmt, insbesondere wobei der Abstand des Wicklungsdrahtes zur Wicklungsachse mit zunehmender Windungszahl zunimmt.**

3. Wicklungsanordnung (1) nach mindestens einem der vorangegangenen Ansprüche, **dadurch gekennzeichnet, dass**
**die, insbesondere alle, Windungen der mindestens einen Wicklung im Wesentlichen innerhalb einer Wicklungsebene angeordnet sind.**

4. Wicklungsanordnung (1) nach mindestens einem der vorangegangenen Ansprüche, **dadurch gekennzeichnet, dass**
**der erste Wicklungsträger (4, 50, 90, 130, 140) einteilig, also einstückig, ausgeführt, insbesondere ausgeformt, ist.**

5. Wicklungsanordnung (1) nach mindestens einem der vorangegangenen Ansprüche, **dadurch gekennzeichnet, dass**
**die Wicklungsträger (3, 4, 50, 90, 130, 140) an die Windungen angespritzt sind.**

6. Wicklungsanordnung (1) nach mindestens einem der vorangegangenen Ansprüche, **dadurch gekennzeichnet, dass**
**die Wicklungsträger (3, 4, 50, 90, 130, 140) aus Kunststoff ausgeführt sind.**

7. Wicklungsanordnung (1) nach Anspruch 6,
**dadurch gekennzeichnet, dass**
**die Wicklungsträger (3, 4, 50, 90, 130, 140) aus Schmelzklebstoff und/oder aus Thermoplast und/oder aus elastischem Material ausgeführt sind.**

8. Wicklungsanordnung (1) nach mindestens einem der vorangegangenen Ansprüche, **dadurch gekennzeichnet, dass**
**der Wicklungsdraht (2) der mindestens einen Wicklung als Litze ausgeführt ist.**

9. Wicklungsanordnung (1) nach Anspruch 8,
**dadurch gekennzeichnet, dass**
**die Litze als Bündel gegeneinander elektrisch isolierten Einzeldrähten ausgeführt ist.**

10. Wicklungsanordnung (1) nach mindestens einem der vorangegangenen Ansprüche, **dadurch gekennzeichnet, dass**
**die Wicklungsanordnung (1)** zwei flachen Spiralwicklungen als Teilwicklungen **aufweist.**

11. Wicklungsanordnung (1) nach Anspruch 10,
**dadurch gekennzeichnet, dass**
**die zwei Teilwicklungen jeweils die gleiche umwickelte Fläche und gleiche Windungszahl, aber entgegengesetzten Wicklungssinn aufweisen.**

12. Verfahren zur Herstellung einer' Wicklungsanordnung (1) nach mindestens einem der Ansprüche 1 bis 11, mit den folgenden Schritten:
(i) Einlegen der mindestens einen Wicklung in eine erste einteilig oder mehrteilig ausgeführte Spritzgussform,
(ii) Herstellen von Wicklungsträgern (3, 4, 50, 90, 130, 140) durch Umspritzen von Teilbereichen der Windungen mit Kunststoff, insbesondere so dass ein Verbundteil aus Windungen und Wicklungsträgern (3, 4, 50, 90, 130, 140) hergestellt ist,
(iii) Entfernen der Spritzgussform, insbesondere nach Abkühlen und Erstarren des Schmelzklebstoffes,
(iv) Einlegen der mindestens einen Wicklung und der Wicklungsträger (3, 4, 50, 90, 130, 140) in ein, insbesondere zweiteilig ausgeführtes, Gussformwerkzeug (150), insbesondere Einlegen des Verbundteils in ein, insbesondere zweiteilig ausgeführtes, Gussformwerkzeug (150),
(v) Vergießen, insbesondere zumindest teilweise ausgeführtes Umgießen, der mindestens einen Wicklung und der Wicklungsträger (3, 4, 50, 90, 130, 140) mit Vergussmasse (60).
**dadurch gekennzeichnet, dass**
**ein oder mehrere Wicklungsträger (3, 4, 50, 90, 130, 140) einen oder mehrere Abstandshalterabschnitte (170) aufweist oder aufweisen,**
**wobei das Gussformwerkzeug (150) Aussparungen, insbesondere Ausnehmungen, zur teilweisen Aufnahme der Abstandshalterabschnitte (170) aufweist.**

13. Verfahren nach Anspruch 12
**dadurch gekennzeichnet, dass**
**im Schritt (iv)** des Einlegens der mindestens einen Wicklung und der Wicklungsträger in das Gussformwerkzeug **das Verbundteil mittels der Abstandshalterabschnitte (170) an den Aussparungen positioniert und/oder ausgerichtet wird.**

14. Verfahren nach Anspruch 12 oder 13,
**dadurch gekennzeichnet, dass**
das Gussformwerkzeug (150) topfförmig ausgebildet ist, insbesondere wobei die Vergussmasse (60) parallel zur Wicklungsebene in das Gussformwerkzeug (150) eingefüllt wird.

15. Verfahren nach Anspruch 12 oder 13,
**dadurch gekennzeichnet, dass**
das Gussformwerkzeug (150) wannenförmig ausgebildet ist, insbesondere wobei die Vergussmasse (60) parallel zur Normalenrichtung der Wicklungsebene in das Gussformwerkzeug (150) eingefüllt wird.

## Claims

1. A winding arrangement (1) for a primary part for contactless energy and/or signal transmission to a secondary part provided in an electric vehicle, having
at least one winding of winding wire (2) and two or more winding supports (3, 4, 50, 90, 130, 140),
wherein the at least one winding has a plurality of turns, in particular therefore a plurality of winding wire portions,
wherein the at least one winding is in the form of a spiral winding,
wherein each winding support (3, 4, 50, 90, 130, 140) is connected to at least two turns and each turn is connected to at least one winding support (3, 4, 50, 90, 130, 140),
wherein the, in particular all, winding supports (3, 4, 50, 90, 130, 140) are each at a distance from one another,
wherein the, in particular all, turns of the at least one winding are each at a distance from one another,
wherein a first turn is connected to a first of the winding supports (4, 50, 90, 130, 140), wherein the first turn is in the circumferential direction, therefore winding direction, repeatedly connected to the first winding support (4, 50, 90, 130, 140) at sites at a distance from one another,
**characterised in that** the winding supports (3, 4, 50, 90, 130, 140) are each at connection sites connected to the turns in a material-bonded manner,
wherein the winding wire has at each connection site a cross-section completely enclosed by the material of the winding supports (3, 4, 50, 90, 130, 140).

2. A winding arrangement (1) according to claim 1,
**characterised in that**
the in particular minimal spacing, present in the direction of the winding axis, of the winding wire between adjacent turns changes as the number of turns increases, in particular decreases or increases monotonically,
in particular wherein the spacing of the winding wire from the winding axis increases as the number of turns increases.

3. A winding arrangement (1) according to at least one of the preceding claims,
**characterised in that**
the, in particular all, turns of the at least one winding are arranged substantially within a winding plane.

4. A winding arrangement (1) according to at least one of the preceding claims,
**characterised in that**
the first winding support (4, 50, 90, 130, 140) is realised, in particular formed, as one part, therefore as one piece.

5. A winding arrangement (1) according to at least one of the preceding claims,
**characterised in that**
the winding supports (3, 4, 50, 90, 130, 140) are injection moulded onto the turns.

6. A winding arrangement (1) according to at least one of the preceding claims,
**characterised in that**
the winding supports (3, 4, 50, 90, 130, 140) are made of plastics material.

7. A winding arrangement (1) according to claim 6,
**characterised in that**
the winding supports (3, 4, 50, 90, 130, 140) are made of hot-melt adhesive and/or of thermoplast and/or of elastic material.

8. A winding arrangement (1) according to at least one of the preceding claims,
**characterised in that**
the winding wire (2) of the at least one winding is a stranded wire.

9. A winding arrangement (1) according to claim 8,
**characterised in that**
the stranded wire is in the form of a bundle of individual wires electrically insulated with respect to one another.

10. A winding arrangement (1) according to at least one of the preceding claims,
**characterised in that**
the winding arrangement (1) has two flat spiral windings as partial windings.

11. A winding arrangement (1) according to claim 10,
**characterised in that**
two partial windings each have the same wound surface and number of turns, however have an opposing winding sense.

12. A method of producing a winding arrangement (1) according to at least one of claims 1 to 11, having the following steps:
I. Insertion of the at least one winding in a first, one-part or multi-part injection mould,
II. Manufacture of winding supports (3, 4, 50, 90, 130, 140) by encapsulation by injection moulding of partial regions of the turns with plastics material, in particular so that a composite part formed of turns and winding supports (3, 4, 50, 90, 130, 140) is manufactured,
III. Removal of the injection mould, in particular after cooling and solidification of the hot-melt adhesive,
IV. Insertion of the at least one winding and the winding supports (3, 4, 50, 90, 130, 140) in a, in particular two-part, casting mould (150), in particular insertion of the composite part in a, in particular two-part, casting mould (150),
V. Casting, in particular at least partial encapsulation by casting, the at least one winding and the winding supports (3, 4, 50, 90, 130, 140) with casting compound (60),
**characterised in that**
one or a plurality of winding supports (3, 4, 50, 90, 130, 140) has/have one or a plurality of spacer portions (170),
wherein the casting mould (150) has cavities, in particular cut-outs, to partially receive the spacer portions (170).

13. A method according to claim 12,
**characterised in that**
in step (iv) of the insertion of the at least one winding and the winding supports into the casting mould, the composite part is positioned and/or oriented at the cavities by means of the spacer portions (170).

14. A method according to claim 12 or 13,
**characterised in that**
the casting mould (150) is pot-shaped, in particular wherein the casting compound (60) is introduced into the casting mould (150) in a manner parallel to the winding plane.

15. A method according to claim 12 or 13,
**characterised in that**
the casting mould (150) is trough-shaped, in particular wherein the casting compound (60) is introduced into the casting mould (150) in a manner parallel to the normal direction of the winding plane.

## Revendications

1. Agencement d'enroulements (1) destiné à une partie primaire en vue de la transmission, sans contact, d'énergie et/ou de signaux à une partie secondaire prévue dans un véhicule électrique, comprenant
au moins un enroulement constitué d'un fil métallique (2), et des supports (3, 4, 50, 90, 130, 140) d'enroulements, au nombre de deux ou plus,
l'enroulement à présence minimale comportant plusieurs spires, c'est-à-dire, en particulier, plusieurs segments de fil métallique d'enroulement,
ledit enroulement, à présence minimale, étant réalisé sous la forme d'un enroulement spiroïdal,
chaque support (3, 4, 50, 90, 130, 140) d'enroulements étant raccordé à au moins deux spires et
chaque spire étant raccordée à au moins un support (3, 4, 50, 90, 130, 140) d'enroulements,
sachant que les supports (3, 4, 50, 90, 130, 140) d'enroulements, notamment la totalité de ces derniers, sont respectivement distants les uns des autres,
sachant que les spires dudit enroulement à présence minimale, notamment la totalité de ces dernières, sont respectivement distantes les unes des autres,
une première spire étant raccordée à un premier support (4, 50, 90, 130, 140), au sein desdits supports d'enroulements,
ladite première spire étant raccordée plusieurs fois audit premier support (4, 50, 90, 130, 140) d'enroulements dans des zones mutuellement distantes dans la direction périphérique, c'est-à-dire dans la direction d'enroulement,
**caractérisé par le fait que**
les supports (3, 4, 50, 90, 130, 140) d'enroulements sont, à chaque fois, raccordés matériellement aux spires dans des zones de jonction,
le fil métallique d'enroulement présentant, dans chaque zone de jonction, une section transversale intégralement ceinturée par le matériau desdits supports (3, 4, 50, 90, 130, 140) d'enroulements.

2. Agencement d'enroulements (1) selon la revendication 1,
**caractérisé par le fait que**
la distance notamment minimale, se présentant en direction de l'axe d'enroulement et comprise entre des spires voisines constituées du fil métallique d'enroulement, varie au fur et à mesure de l'accroissement du nombre desdites spires, et diminue ou augmente en particulier de façon monotone,
sachant notamment que la distance, comprise entre ledit fil métallique d'enroulement et ledit axe d'enroulement, augmente au fur et à mesure de l'accroissement dudit nombre des spires.

3. Agencement d'enroulements (1) selon au moins l'une des revendications précédentes,
**caractérisé par le fait que**
les spires de l'enroulement à présence minimale, notamment la totalité de ces dernières, sont situées pour l'essentiel à l'intérieur d'un plan d'enroulement.

4. Agencement d'enroulements (1) selon au moins l'une des revendications précédentes,
**caractérisé par le fait que**
le premier support (4, 50, 90, 130, 140) d'enroulements est réalisé, notamment moulé d'un seul tenant, c'est-à-dire d'une seule pièce.

5. Agencement d'enroulements (1) selon au moins l'une des revendications précédentes,
**caractérisé par le fait que**
les supports (3, 4, 50, 90, 130, 140) d'enroulements sont rapportés sur les spires en étant moulés par injection.

6. Agencement d'enroulements (1) selon au moins l'une des revendications précédentes,
**caractérisé par le fait que**
les supports (3, 4, 50, 90, 130, 140) d'enroulements sont réalisés en matière plastique.

7. Agencement d'enroulements (1) selon la revendication 6,
**caractérisé par le fait que**
les supports (3, 4, 50, 90, 130, 140) d'enroulements sont réalisés en un adhésif thermofusible et/ou en une matière thermoplastique et/ou en un matériau élastique.

8. Agencement d'enroulements (1) selon au moins l'une des revendications précédentes,
**caractérisé par le fait que**
le fil métallique (2) de l'enroulement à présence minimale est réalisé sous la forme d'un toron.

9. Agencement d'enroulements (1) selon la revendication 8,
**caractérisé par le fait que**
le toron est réalisé sous la forme d'un faisceau de fils métalliques individuels, isolés électriquement les uns des autres.

10. Agencement d'enroulements (1) selon au moins l'une des revendications précédentes,
**caractérisé par le fait que**
ledit agencement d'enroulements (1) est pourvu de deux enroulements spiroïdaux aplatis, constituant des enroulements partiels.

11. Agencement d'enroulements (1) selon la revendication 10,
**caractérisé par le fait que**
les deux enroulements partiels présentent, à chaque fois, la même surface circonscrite par un enroulement et le même nombre de spires, mais des sens d'enroulement opposés.

12. Procédé de fabrication d'un agencement d'enroulements (1) conforme à au moins l'une des revendications 1 à 11, incluant les étapes suivantes :
(i) insertion de l'enroulement, à présence minimale, dans un premier moule d'injection réalisé en une ou plusieurs partie(s),
(ii) fabrication de supports (3, 4, 50, 90, 130, 140) d'enroulements en enrobant des régions partielles des spires par injection, à l'aide d'une matière plastique, notamment de manière à produire une pièce composite constituée par des spires et par des supports (3, 4, 50, 90, 130, 140) d'enroulements,
(iii) retrait dudit moule d'injection, notamment après refroidissement et solidification de l'adhésif thermofusible,
(iv) insertion dudit enroulement à présence minimale, et desdits supports (3, 4, 50, 90, 130, 140) d'enroulements, dans un outil de coulée (150) notamment réalisé en deux parties,
en particulier insertion de ladite pièce composite dans un outil de coulée (150) notamment réalisé en deux parties,
(v) scellement, notamment enrobage par coulée effectué au moins partiellement, à l'aide d'une masse de scellement (60), dudit enroulement à présence minimale et desdits supports (3, 4, 50, 90, 130, 140) d'enroulements,
**caractérisé par le fait**
**qu'**un ou plusieurs support(s) (3, 4, 50, 90, 130, 140) d'enroulements comporte(nt) une ou plusieurs zone(s) (170) de maintien d'espacement,
l'outil de coulée (150) étant muni d'échancrures, en particulier d'évidements conçus pour recevoir partiellement les zones (170) de maintien d'espacement.

13. Procédé selon la revendication 12,
**caractérisé par le fait que**,
durant l'étape (iv) d'insertion de l'enroulement à présence minimale et des supports d'enroulements, dans l'outil de coulée, la pièce composite est positionnée et/ou alignée au niveau des échancrures au moyen des zones (170) de maintien d'espacement.

14. Procédé selon la revendication 12 ou 13,
**caractérisé par le fait que**
l'outil de coulée (150) est réalisé en forme de creuset, la masse de scellement (60) étant notamment déversée dans ledit outil de coulée (150) parallèlement au plan d'enroulement.

15. Procédé selon la revendication 12 ou 13,
**caractérisé par le fait que**
l'outil de coulée (150) est réalisé en forme de cuvette, la masse de scellement (60) étant notamment déversée, dans ledit outil de coulée (150), parallèlement à la direction perpendiculaire au plan d'enroulement.
